Europäisches Patentamt

(19) European Patent Office

Office européen des brevets

(11) Numéro de publication: **0 1 1 9 901**
**B1**

(12) **FASCICULE DE BREVET EUROPEEN**

(45) Date de publication du fascicule du brevet:
**15.07.87**

(21) Numéro de dépôt: **84400419.2**

(22) Date de dépôt: **02.03.84**

(51) Int. Cl.⁴: **F 16 M 11/24**

(54) Plateau mobile à changement de niveaux par paliers selon la charge supportée.

(30) Priorité: **09.03.83 FR 8303848**

(43) Date de publication de la demande:
**26.09.84 Bulletin 84/39**

(45) Mention de la délivrance du brevet:
**15.07.87 Bulletin 87/29**

(84) Etats contractants désignés:
**BE DE IT**

(56) Documents cités:
**FR - A - 2 469 644**
**FR - A - 2 494 399**
**US - A - 2 581 023**
**US - A - 3 350 065**
**US - A - 4 360 187**

(73) Titulaire: **Tergny, Guy, 6, Allée Paul Verlaine,**
**F-60100 Nogent-sur-Oise (Oise) (FR)**
Titulaire: **Dubail, Gabriel, 19, rue Pierre et Marie Curie,**
**F-60100 Nogent-sur-Oise (Oise) (FR)**

(72) Inventeur: **Tergny, Guy, 6, Allée Paul Verlaine,**
**F-60100 Nogent-sur-Oise (Oise) (FR)**
Inventeur: **Dubail, Gabriel, 19, rue Pierre et Marie Curie,**
**F-60100 Nogent-sur-Oise (Oise) (FR)**

(74) Mandataire: **Chevallier, Robert Marie Georges, Cabinet**
**BOETTCHER 23, rue La Boétie, F-75008 Paris (FR)**

## Description

L'invention a pour objet un plateau monté par rapport à un châssis avec la possibilité de se déplacer à des niveaux différents, ces niveaux étant atteints automatiquement et par paliers en fonction de la charge supportée par ce plateau.

Un plateau mobile comme celui de l'invention est utile dans l'industrie, par exemple pour servir de plateau de chargement ou de déchargement faisant partie d'un chariot ou pour servir de table de travail.

Il est fréquent d'empiler en lits successifs ou en couches superposées des pièces qu'une personne prélève une à une pour y exécuter une opération ou pour alimenter une machine. Il est souhaitable que le lit ou la chouche où sont prélévées les pièces se trouve à un niveau convenable prédéterminé, qui minimise la fatigue de la personne, puis que le lit ou la couche inférieure soit placée à son tour à ce même niveau quand la couche précédente a été épuisée. En sens inverse, quand on empile des pièces sur un plateau en y constituant au moins deux couches superposées, il est souhaitable que les dépôts des pièces se fasse toujours à un même niveau de moindre fatigue.

Il existe déjà de nombreux mécanismes conçus pour mettre et pour maintenir un plateau à un niveau prédéterminé. Ils se classent en deux catégories principales: ceux qui nécessitent une source d'énergie extérieure (généralement un moteur électrique ou un vérin alimenté en fluide sous pression (US-A-3 350 065), ceux qui utilisent des ressorts se tassant progressivement quand une charge leur est imposée, de sorte que le plateau lui-même se déplace progressivement quand la charge varie.

Il existe aussi un plateau mobile qui nécessite un dispositif d'arrêt mécanique à commande manuelle (US-A-2 581 023).

L'invention a pour but principal d'apporter un plateau mobile ne faisant appel à aucune source d'énergie extérieure et susceptible d'occuper au moins deux niveaux déterminés, espacés verticalement, en fonction de la charge à supporter, sans variation progressive entre ces niveaux, le changement de niveau se faisant automatiquement par exemple dès qu'une première couche a été retirée totalement, ou a été complétée totalement.

A partir d'un châssis, qui peut être fixe ou qui peut être déplaçable grâce à des roues, et d'un plateau qui est monté mobile généralement en sens vertical par rapport à ce châssis grâce à des moyens de guidage (connu du document US-A-3 350 065 ou US-A-2 581 023), selon l'invention, au moins un ressort pneumatique ayant une course déterminée d'extension ou de rétraction en-deçà ou au-delà d'une force déterminée est interposé entre le plateau et le châssis, ce ressort pneumatique étant choisi à une force d'extension-rétraction qui correspond au poids total d'une couche chargeant le plateau et à une course qui correspond à la hauteur de ladite couche.

Ainsi, quand il s'agit de charger le plateau, le ou les ressorts pneumatiques étant en extension et tenant le plateau à un niveau convenable de chargement, quand une première couche se trouve alors au niveau convenable de chargement.

Le même processus se produit, dans le sens de l'extension du ou des ressorts pneumatiques, quand il s'agit de décharger le plateau de deux couches superposées.

Il est possible de supporter le plateau directement à l'aide de plusieurs ressorts pneumatiques. Il est possible aussi d'articuler le plateau sur le châssis à l'une de ses extrémités à l'aide de leviers articulés et de le supporter à son extrémité opposée au moyen de ressorts pneumatiques.

Il est possible encore de prévoir plusieurs étages de ressorts pneumatiques de façon à disposer d'autant de changements de niveaux du plateau, les forces et les courses des ressorts de chaque étage étant choisies en conséquence.

Les ressorts pneumatiques sont connus en soi en tant que composants mécaniques individuels; on les trouve dans le commerce. Ils sont disponibles avec des courses qui s'étendent dans une gamme de 60 mm à 410 mm et des forces d'extension-rétraction allant de 10 à 600 daN.

On donnera maintenant, sans intention limitative et sans exclure aucune variante, une description de deux exemples de réalisation. On se reportera au dessin annexé dans lequel:

— la figure 1 est une vue schématique en perspective d'un chariot roulant à plateau mobile entre deux niveaux déterminés, à un étage de ressorts pneumatiques, conforme à l'invention,

— la figure 2 est une vue schématique d'un chariot analogue mais à plateau mobile entre trois niveaux déterminés, à deux étages de ressorts pneumatiques, conforme à l'invention.

Un chariot selon l'inventon comprend un châssis 1 monté sur des roues 2 et un plateau 3 mobile en sens vertical, disposé pour se déplacer parallèlement à lui-même. A cet effet, dans cet exemple, des leviers tels que deux croisillons 4, 5 articulés chacun en leur centre 6 sont disposés dans deux plans verticaux parallèles pour supporter le plateau 3 au-dessus du châssis 1. Dans chaque croisillons 4, 5, une des extrémités des branches 7, 8 articulées ensemble en 6, est articulée respectivement en 9 et en 10 sur le châssis 1 et sur le plateau 3. L'extrémité opposée inférieure de chaque branche 8 articulée en 10 sur le plateau 3 est guidée en coulissement sur le châssis, de préférence à l'aide d'un galet 11. Les extrémités opposées supérieures des branches 7 articulées en 9 sur le châssis 1 sont réunies par une traverse 12 et deux ressorts pneumatiques 13, 14 sont montés, parallèlement entre cette traverse 12 et le châssis 1.

L'extrémité du plateau 3 opposée à celle où se trouvent les articulations 10 des branches 8 repose sur les branches 7 par l'intermédiaire de galets 11' qui sont respectivement sur la même verticale que les galets 11. En raison de la symétrie de cet ensemble, le plateau 3 est horizontal quand le chariot repose sur une surface horizontale.

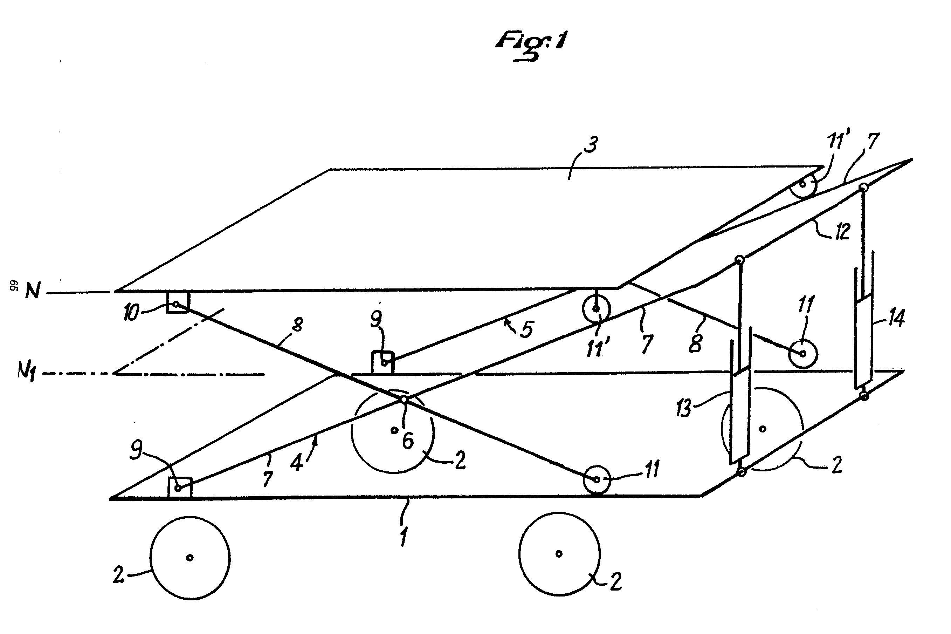

Sur la figure 1, les ressorts pneumatiques 13, 14 qui sont identiques, sont en position d'extension.

Le plateau 3 est à un niveau déterminé N, choisi comme niveau de travail convenable pour la pose sans fatigue d'un ensemble de pièces identiques devant être déposées en deux couches superposées.

Quand une première couche de pièces aura été déposée sur le plateau 3, le poids total de ces pièces excédera la force d'extension des ressorts pneumatiques 13, 14 qui passeront automatiquement à leur position de rétraction, ce qui fera descendre le plateau 3 à un niveau N1 indiqué en trait mixte, choisi pour que la face supérieure de la première couche se trouve alors au niveau N de travail convenable.

S'il s'agissait de décharger le plateau 3 pour alimenter une machine en pièces à travailler, ce plateau serait d'abord chargé de deux couches superposées qui mettraient les ressorts pneumatiques à leur position de rétraction et la face supérieure de la couche inférieure au niveau N, le plateau 3 étant au niveau N1. Dès l'enlèvement de la première pièce de la couche inférieure, les ressorts pneumatiques 13, 14 se mettront à leur position d'extension et le plateau sera élevé au niveau N.

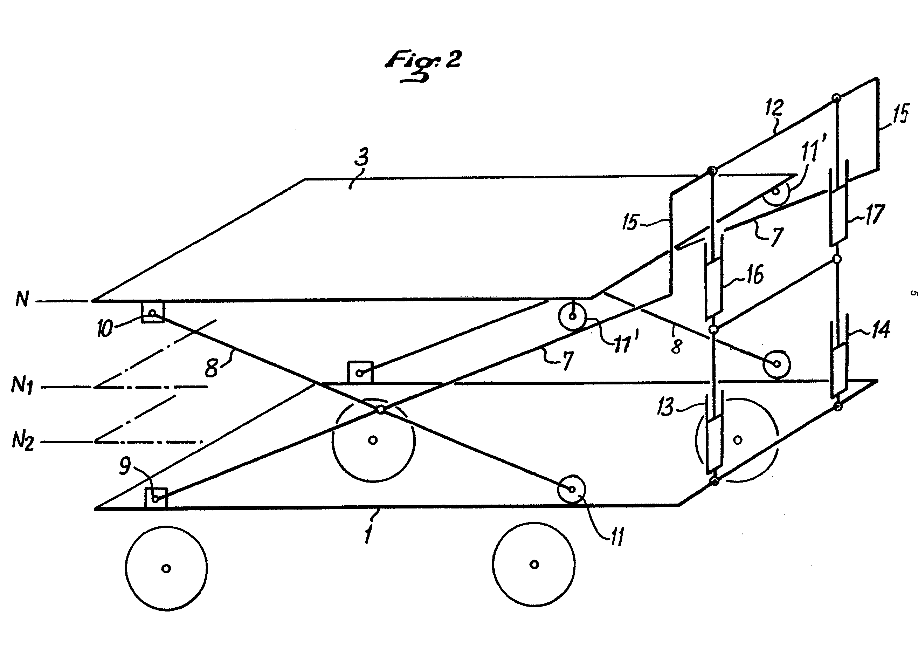

Le chariot illustré par la figure 2 est identique à celui qui vient d'être décrit en référence à la figure 1 sauf que les deux branches 7 ont été prolongées à leurs extrémités libres par un prolongement vertical 15 pour que l'on puisse installer deux étages de ressorts pneumatiques 13, 14 et 16, 17 entre la traverse 12 et le châssis 1.

A partir de la position du plateau 3, situé à un niveau N, quand une première couche a été chargée sur ce plateau, les ressorts pneumatiques 13, 14 se rétractent, mettant le plateau 3 au niveau N1; quand une deuxième couche a été déposée sur la première couche, les ressorts pneumatiques 16, 17 – choisis en conséquence – se rétractent, mettant le plateau 3 à un troisième niveau N2, la face supérieure de la deuxième couche se trouvant alors au niveau N pour le chargement de troisième couche. Le processus inverse se produit pendant le déchargement.

Les courses et les forces des ressorts pneumatiques 13, 14 d'une part, et 16, 17 d'autre part, sont choisies en fonction du poids et de l'épaisseur des couches et ne sont pas nécessairement identiques.

Tout moyen convenable de guidage du plateau 3 dans ses déplacements peut être adopté en remplacement des croisillons décrits plus haut. L'invention n'impose pas de moyen particulier. On peut même faire porter le plateau 3 directement par des ressorts pneumatiques à condition qu'il existe au moins un moyen de maintien du plateau parallèlement à lui-même et que la charge soit répartie également entre les ressorts pneumatiques pendant le chargement ou le déchargement, ou que les ressorts pneumatiques soient choisis en fonction de la répartition irrégulière éventuelle de la charge.

On peut aussi prévoir plus de deux étages de ressorts pneumatiques et plus de trois niveaux du plateau 3.

Bien entendu, le châssis 1 pourrait être installé à poste fixe au lieu d'être pourvu de roues 2.

Dans tous les cas, sans apport d'énergie extérieure, le plateau 3 permet de travailler à chaque couche au niveau de travail convenable N.

## Revendications

1. Châssis supportant un plateau (3) monté mobile généralement en sens vertical par rapport à ce châssis (1) grâce à des moyens de guidage (4, 5) quelconques appropriés, destiné à supporter au moins deux couches régulières superposées, conçu pour permettre de travailler à chaque couche à un niveau de travail convenable (N), caractérisé en ce qu'au moins un ressort pneumatique (13, 14; 16, 17) ayant une course déterminée d'extension et de rétraction en-deçà ou au-delà d'une force déterminée est interposé entre le plateau (3) et le châssis (1), ce ou ces ressorts pneumatiques (13, 14; 16, 17) étant choisis à une force d'extension-rétraction qui correspond au poids total d'une couche chargeant le plateau et à une course qui correspond à la hauteur de ladite couche.

2. Châsis supportant un plateau selon la revendication 1, caractérisé en ce que plusieurs étages superposés de ressorts pneumatiques (13, 14 – 16, 17) sont interposés entre le plateau (3) et le châssis (1).

3. Châssis supportant un plateau selon la revendication 2, caractérisé en ce que l'une des extrémités du plateau (3) est articulée par rapport à une extrémité correspondante du châssis (1) au moyen de leviers articulés (8) et son extrémité opposée est supportée par au moins un étage de ressorts pneumatiques (13, 14).

4. Châssis supportant un plateau selon la revendication 3, caractérisé en ce que les leviers articulés (7, 8) constituent deux croisillons (4, 5) ayant des extrémités inférieures montées coulissantes le long du châssis (1) et des extrémités supérieures supportées par au moins un étage de ressorts pneumatiques (13, 14).

## Patentansprüche

1. Gestell, das eine mit Führungselementen (4, 5) im allgemeinen vertikal zum Gestell (1) verstellbare Plattform (3) trägt, auf der mindestens zwei gleichmässig übereinanderliegende Schichten anordenbar sind und von der jede Schicht auf einer zweckmässigen Arbeitshöhe (N) gehalten wird, dadurch gekennzeichnet, dass zwischen der Plattform (3) und dem Gestell (1) mindestens eine Pneumatikfeder (13, 14; 16, 17) mit einem oberhalb und unterhalb einer bestimmten Kraft festgelegten Vor- bzw. Rückwärtshub angeordnet ist und dass die Feder oder Federn (13, 14; 16, 17) eine dem Gesamtgewicht einer die Plattform (3) belastenden Schicht entsprechende Ausdehn- bzw. Rückholkraft sowie einem der Schichthöhe entsprechenden Hub haben.

2. Gestell nach Anspruch 1, dadurch gekennzeichnet, dass mehrere übereinander angeordnete Etagen von Pneumatikfedern (13, 14 – 16, 17) zwischen der Plattform (3) und dem Gestell angeordnet sind.

3. Gestell nach Anspruch 2, dadurch gekennzeichnet, dass einer der Ränder der Plattform (3) in bezug auf einen entsprechenden Rand des Gestells (1) mit Lenkhebeln (8) gelagert ist und deren gegenüberliegender Rand mindestens von einer Etage Pneumatikfedern (13, 14) getragen wird.

4. Gestell nach Anspruch 3, dadurch gekennzeichnet, dass die Lenkhebel (7, 8) zwei Kreuzstreben (4, 5) bilden, die untere entlang des Gestells (1) gleitend befestigte und obere von mindestens einer Etage Pneumatikfedern (13, 14) getragene Enden haben.

**Claims**

1. A frame structure supporting a plate (3) mounted movably generally in a vertical direction with respect to said frame structure (1) by virtue of any suitable guide means (4, 5), which is intended to support at least two regular superposed layers and which is designed to make it possible to work at each layer at a suitable working level (N), characterised in that at least one pneumatic spring (13, 14; 16, 17) having a given extension and retraction travel below and above a given force is interposed between the plate (3) and the frame structure (1), said pneumatic spring or springs (13, 14; 16, 17) being selected with an extension-retraction force which corresponds to the total weight of a layer loading the plate and a travel movement which corresponds to the height of said layer.

2. A frame structure for supporting a plate according to claim 1 characterised in that a plurality of superposed stages of pneumatic springs (13, 14 – 16, 17) are interposed between the plate (3) and the frame structure (1).

3. A frame structure for supporting a plate according to claim 2 characterised in that one of the ends of the plate (3) is pivoted with respect to a corresponding end of the frame structure (1) by means of pivoted levers (8) and its opposite end is supported by at least one stage of pneumatic springs (13, 14).

4. A frame structure for supporting a plate according to claim 3 characterised in that the pivoted levers (7, 8) constitute two cross assemblies (4, 5) having lower ends mounted slidably along the frame structure (1) and upper ends supported by at least one stage of pneumatic springs (13, 14).

*Fig.1*

Fig. 2